# EUROPÄISCHE PATENTSCHRIFT

(11) **EP 0 549 747 B1**
(45) Veröffentlichungstag und Bekanntmachung des Hinweises auf die Patenterteilung: **28.08.1996**
(21) Anmeldenummer: 92912365.1
(22) Anmeldetag: 23.06.1992
(51) Int. Cl.: B05B 7/16, B23K 26/14

(54) **DÜSE ZUM OBERFLÄCHENBEHANDELN METALLISCHER WERKSTÜCKE**
NOZZLE FOR SURFACE TREATMENT OF METALLIC WORKPIECES
BUSE POUR TRAITEMENT DE SURFACE DE PIECES METALLIQUES

(30) Priorität: 24.06.1991 DE 4120790
(43) Veröffentlichungstag der Anmeldung: 07.07.1993
(73) Patentinhaber: Plasmainvent AG, 6340 Baar (CH)
(72) Erfinder: KRAUSE, Andreas, D-8027 Dresden (DE); UELZE, Andreas, D-8020 Dresden (DE); BECKER, Reinhard, D-8028 Dresden (DE)
(74) Vertreter: Hammer, Bruno Dr.
(86) Internationale Anmeldenummer: CH9200119
(87) Internationale Veröffentlichungsnummer: WO9300171

(56) Entgegenhaltungen:
- EP-A- 0 195 409
- DE-A- 3 637 568
- DE-A- 3 941 608
- GB-A- 2 227 964
- PATENT ABSTRACTS OF JAPAN vol. 11, no. 132 (C-417)(2579) & JP,A,61 264 168 (AGENCY OF IND SCIENCE & TECHNOLOGY) 22. November 1986 siehe Zusammenfassung

## Beschreibung

Die Erfindung betrifft eine Düse zum insbesondere Pulver-Auftragsschweissen bzw. Dünnschichtlegieren von hochbeanspruchten metallischen Bauteilen mittels Hochenergiestrahl nach dem Oberbegriff des Anspruchs 1.

Besondere Bedeutung beim Laser-Beschichten und -Legieren kommt unter dem Aspekt, die Arbeitsschritte des Zuführens des auf das Werkstück aufzutragenden Zusatzwerkstoffes und dessen Laserstrahlbehandlung in einem Arbeitsgang durchzuführen, der Schaffung einer geeigneten Anordnung mit guter Positioniermöglichkeit von Laserstrahl und Pulver-Fördergasstromzuführung zu.

Zur Verminderung der Richtungsabhängigkeit beim Laser-Pulver-Auftragsschweissen sind aus dem Tagungsband "Lasertechnik" BIAS/VDI - Bremen 1991, S. 442 ff. unter dem Titel "Aspekte des Laser-Spritzbeschichten" von R. Becker, C. Binroth und G. Sepold, mehrere Düsen-Varianten mit dem Ziel einer quasi-zentrischen Pulverzufuhr bekannt. Die dort beschriebene Mehrstrahldüse lässt eine Zentrierung des Pulverfördergasstromes nur schwer zu, wobei sich geringe Unterschiede der Strömungsimpulse der Einzelstrahlen negativ auswirken. Nachteilig wirkt sich ausserdem die notwendige, sehr genaue Ausrichtung der Teilströme aus, die mit einem erheblichen Aufwand verbunden ist.

Das Zentrieren des Pulver-Fördergasstromes mittels der vorgestellten Ringdüse ist aufgrund des konstruktionsbedingt ungleichmässig verteilten Pulverstromaustritts nicht möglich. Die dritte Variante, bei der ein zusätzlicher separater Gasstrom den Pulverstrom nach unten in Richtung Substrat ablenkt, gewährleistet zwar eine ringförmige Verteilung des Pulvers, ist aber gegenüber Verschmutzungen sehr empfindlich. Die Pulverteilchen setzen sich an den Wandungen der Austrittsöffnungen fest und führen zu störenden Verwirbelungen des Gasstromes bzw. können die Düsenöffnung völlig dichtsetzen.

Die aus der US-A-4.724.299 bekannte Laser-Spritzdüse besteht aus einem Düsenkörper mit einem ersten und zweiten für sich abgeschlossenen Teil und einem Strahldurchgangsweg, der sich so dazwischen erstreckt, dass der Laserstrahl in den Durchgang eintritt, durch das erste Teil hindurchgeht und durch das zweite Teil austritt. Weiterhin umschliesst ein Gehäuse das zweite Teil, so dass ein ringförmiger Durchgang gebildet und mit dem genannten Strahldurchgang eine koaxiale Oeffnung umschlossen ist, die dem Laserstrahl den Durchgang gestattet. Des weiteren existieren Mittel, die mit dieser Oeffnung operieren, um ein Pulver so zu fördern, dass dieses und der Strahl an einem gemeinsamen Punkt zusammenlaufen.

Aus der US-A-4,804,815 ist eine der zuvor beschriebenen Lösung ähnliche Düse bekannt, die ebenfalls nach dem Prinzip des Laser-Spritzbeschichten arbeitet und der vorbeugenden Oberflächenbehandlung von Nickellegierungen dient.

GB-A-2.227.964 beschreibt eine Düse zum Zuführen von pulverförmigem Schweissmaterial in den Arbeitsbereich einer Pulverschweissanlage. Die Düse weist einen Laserkanal auf durch den ein Laserstrahl verläuft. Das pulverförmige Schweissmaterial wird über mehrere Pulver-Zuführkanäle einem einzigen kegelringförmigen Hohlraum zugeführt.

Die beiden erwähnten Düsenkonstruktionen haben infolge des speziellen Einsatzes für das Laser-Spritzbeschichten den gemeinsamen Mangel, dass der Verbrauch an Spülgas, welches die geschmolzenen Partikel auf die zu beschichtende Oberfläche spritzt, sehr hoch ist. Die thermische Belastung der Konstruktionen an der Pulveraustrittsöffnung ist vergleichsweise gross, da die Pulverpartikel noch innerhalb der Düse mit dem Laserstrahl zusammentreffen und somit das Schmelzen der Pulverpartikel in der Düse erfolgt und auftretende Wärmestrahlungen die Spritzdüsenaustrittsöffnungen direkt belasten. Der notwendige zweite Kühlkreislauf der ersten Düse erhöht den Fertigungsaufwand.

Der im Anspruch 1 angegebenen Erfindung liegt daher die Aufgabe zugrunde, bei Beseitigung der zuvor aufgezeigten Mängel und entgegen den üblichen Methoden des Laser-Spritzbeschichtens eine Düse, insbesondere zum Laser-Pulver-Auftragsschweissen bzw. Dünnschichtlegieren zu schaffen, die ein richtungsunabhängiges Beschichten hochbeanspruchter metallischer Bauteile bei gleichmässiger, ringförmiger Verteilung des zugeführten Pulvermasse- und Schutzgasstromes gewährleistet. Die Düse soll als wesentliche Ergänzung des bereits vorhandenen Werkzeugsortimentes mit wenigen Handgriffen an beispielsweise handelsübliche Hochleistungslaseranlagen anschliessbar sein.

Diese Aufgabe wird bei einer gattungsgemässen Düse nach dem Oberbegriff des Anspruchs 1 durch dessen kennzeichnende Merkmale gelöst. Vorteilhafte Weiterbildungen der erfindungsgemässen Düse sind in den abhängigen Ansprüchen angegeben. Eine Laser-Beschichtungs-Anlage nach der Erfindung weist eine Düse nach der Erfindung auf.

Mit einer erfindungsgemässen Düse, die wahlweise an eine spiegel- oder linsenfokussierte Hochleistungslaseranlage anschliessbar ist, kann ein definierter Pulvermassenstrom, der sich aus einer bestimmten Pulvermenge und einem bestimmten Anteil an Fördergas zusammensetzt, über eine im folgenden näher beschriebene, spezielle Pulverzuführung derart verteilt werden, dass die Spitze des sich als umgekehrter Kegel dargestellenden Pulver-Fördergasstromaustrittes ausserhalb der Düse mit dem defokussierten Laserstrahl zusammentrifft. Dort kommt es zum Anschmelzen der Pulverpartikel und somit zur Bildung eines Schmelzbades mit geringer Aufschmelzung der Werkstückoberfläche und somit zum Auftragsschweissprozess selbst. Dabei gewährleistet die ringförmige Pulververteilung ein flächiges Beschichten in der gesamten x-y-Ebene bei Verbesserung der Oberflächenbeschaffenheit und -eigenschaften und die Optimierung des Verschleissverhaltens des jeweiligen Bauteiles. Die nach der Montage der Düse zwischen Laserstrahlführungsteil, Pulverführungskappe, Schutzgaszuführungskappe und Schutzgaskappe entstandenen Räume und Metall-Metall-Verbindungen sichern die Wärmeableitung der vom Schmelzbad reflektierten Wärme bis zur Wasserkühlung und somit den thermischen Schutz der Düse beim Laser-Pulver-Auftragsschweissen.

Die Winkel der Kegelstümpfe des Laserstrahlführungsteils, der Pulverführungskappe, der Schutzgasführungskappe und der Innenkegelfläche der Schutzgaskappe zur gedachten Mittelachse, können jeweils nahezu gleich und zwischen etwa 10° und 45°, vorzugsweise zwischen 28° und 40° liegen. Die Anzahl der in den Kegelstumpf der Pulverführungskappe eingearbeiteten Pulverführungskanäle kann nahezu gleich der in den Kegelstumpf der Schutzgasführungskappe eingearbeiteten Schutzgasführungskanäle sein und je zwischen 4 und 40, vorzugsweise zwischen je 15 und 28 liegen. Die Pulverführungskanäle können 0.7 mm bis 2 mm breit und 0.3 mm bis 2 mm tief sein und im oberen Bereich einen halbkreisförmigen Verteilungsraum besitzen. Der Pulver-Fördergasstrom strömt vorzugsweise über einen oder mehrere gerade, radiale Anschlüsse in den Raum zwischen Pulverführungskappe und Schutzgasführungskappe ein. Die Schutzgasführungskanäle sind mit Vorteil 1 mm bis 3 mm breit und 1 mm bis 2 mm tief und besitzen im oberen Bereich einen halbkreisförmigen Verteilungsraum. Mit Vorteil wird das Schutzgas über zwei oder mehrere gerade, radiale Anschlüsse in die Düse geführt und in den Raum zwischen Schutzgasführungskappe und Schutzgaskappe geführt. Die Laserstrahlaustrittsöffnung und die jeweils konzentrisch darum auf Kreisringen angeordneten Austrittsöffnungen der Pulver- und Schutzgasführungskanäle können sich, müssen sich aber nicht allesamt auf einer Horizontalebene befinden.

Der Winkel α zwischen Laserstrahl und Pulverkanälen im Bereich der Austrittsöffnungen, bzw. Laserstrahl und Schutzgaskanälen im Bereich der Austrittsöffnungen liegt etwa zwischen 10° und 45°, mit Vorteil etwa im Bereich von 28° und 40°. Dabei brauchen die Kanäle in diesem Bereich ihrer Austrittsöffnungen nicht parallel zu verlaufen.

Um die Düse oder einzelne Teile davon vor übermässiger Erwärmung zu schützen, können einer oder mehrere Kühlmittelkanäle vorgesehen sein.

Die Erfindung betrifft also eine Düse zum Oberflächenbehandeln metallischer Werkstücke, insbesondere zum Pulver-Auftragsschweissen bzw. Dünnschichtlegieren von hochbeanspruchten metallischen Bauteilen, welche wahlweise an eine spiegel- oder linsenfokussierte Hochenergiestrahlanlage, vorzugsweise Hochleistungslaseranlage, unter Nutzung der vorhandenen Kühlmedienaggregate, Schutzgasleitungen und Pulverförderer/-absauger anschliessbar ist. Gegenüber bekannten Laser-Spritzdüsen gewährleistet die Düse ein richtungsunabhängiges Beschichten hochbeanspruchter metallischer Bauteile bei einer gleichmässigen, ringförmigen Verteilung des zugeführten Pulver-Fördergas- und Schutzgasstromes. Dabei wird ein definierter Pulvermassestrom, der sich aus einer bestimmten Pulvermenge und einem bestimmten Anteil an Fördergas zusammensetzt, über eine spezielle Pulverzuführungseinrichtung derart verteilt, dass die Spitze des sich als umgekehrter Kegel darstellenden Pulver-Fördergasstromaustrittes ausserhalb der Düse mit dem defokussierten Laserstrahl zusammentrifft, und es dort zum Anschmelzen der Pulverpartikel und somit zur Bildung eines Schmelzbades mit geringer Aufschmelzung des Substrates und somit zum Auftragsschweissprozess selbst kommt.

Ein Ausführungsbeispiel der Erfindung ist in der Zeichnung dargestellt und wird im folgenden näher erläutert.

Es zeigen
- Fig. 1: eine Seitenansicht der erfindungsgemässen Düse in schematischer Darstellung und
- Fig. 2: eine Aufsicht auf die Düse mit den Anschlüssen für den Pulver-Fördergasstrom und den Schutzgasstrom.

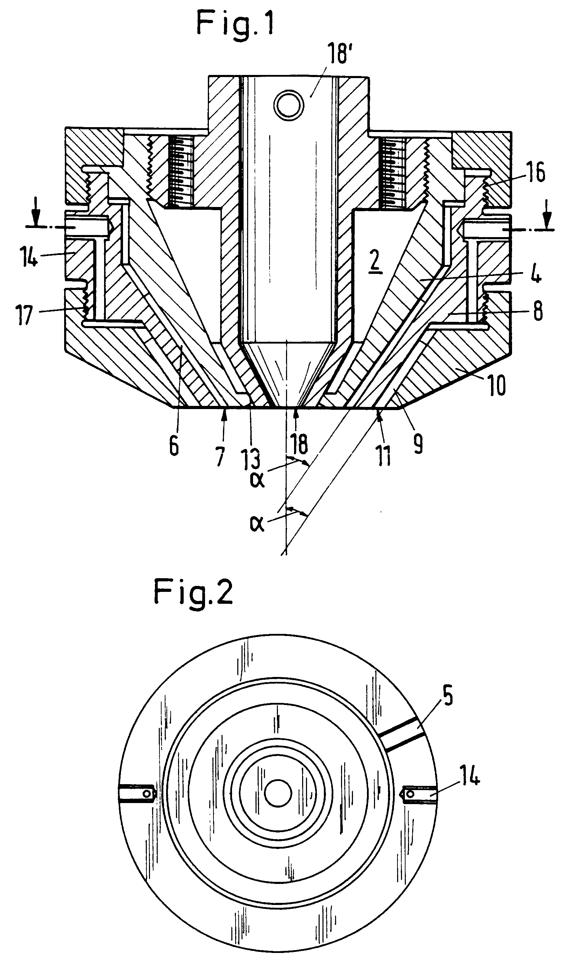

Es wird davon ausgegangen, dass die erfindungsgemässe Düse gemäss Fig. 1 und Fig. 2 zum Oberflächenbehandeln eines hochbeanspruchten metallischen Werkstückes für das Laser-Pulver-Auftragsschweissen an eine Hochleistungslaseranlage unter Nutzung der vorhandenen Kühlmedienaggregate, Schutzgasleitungen und einem Pulverförderer/-absauger über den im oberen Bereich konstanten Innendurchmesser ihres zentrischen Laserstrahlführungsteils 1 angeschlossen ist. Das untere zusammenlaufende Teilstück des Laserstrahlführungsteils 1 ist mit einer Laserstrahlaustrittsöffnung 18 versehen, hingegen dessen oberes angeflanschtes Ringteil Kühlmedienzu- und - abführungen 3 aufweist, welche in einen Wasserkühlraum 1 münden und im Betriebszustand die Wasserkühlung realisieren. Der Wasserkühlraum 2 ist einerseits durch die zylindrische und keglige Aussenkontur des Laserstrahlführungsteils 1 und andererseits durch die kegelstumpfförmige Innenkontur einer Pulverführungskappe 4 gebildet. Er ist im schwächer werdenden Bereich mittels endseitig an der Pulverführungskappe 4 angeformter Dichtlippe 13, die an der Aussenkontur des Laserstrahlführungsteils 1 anliegt, und im nach oben aufgeweiteten Bereich durch einen Formschluss zwischen Laserstahlführungsteil 1 und Pulverführungskappe 4 mittels Gewinde 12 am Ringteil abgedichtet. Auf der äusseren Umfangsfläche der im unteren Teilstück kegelstumpfförmigen Pulverführungskappe 4 sind 22 Pulverführungskanäle 6 mit einer Breite von 1 mm und einer Tiefe von 1 mm gleichmässig verteilt, entsprechend dem durch den Kegelstumpf festgelegten Winkel von 35° zur gedachten Mittelachse der Düse eingearbeitet, welche eine ordnungsgemässe ringförmige Pulververteilung gewährleisten. Die Pulverführungskanäle 6 sind nach aussen durch die Innenkontur einer Schutzgasführungskappe 8 derart begrenzt, dass sich bei gleichem Winkel oberhalb von ihnen ein Zwischenraum für das Einbringen und Verteilen des Pulver-Fördergasstromes über mindestens einen geraden, radialen Anschluss 5 ergibt. Eine form- und kraftschüssige Verbindung zwischen beiden Kappen 4, 8 mit dichter Umschliessung der Pulverführungskanäle 6 bis zu deren Austrittsöffnungen 7 wird beim Festdrehen eines Ueberwurfringes 15 mittels Gewinde 16 an seinem stufenförmigen Absatz erreicht.

Auf der Aussenfläche der Schutzgasführungskappe 8 sind 20 gleichmässig verteilte Schutzgasführungskanhle 9 ebenfalls unter einem Winkel 35° zur Mittelachse der Düse mit einer Breite von 2,5 mm und einer Tiefe von 1,5 mm angeordnet.

Den äusseren Abschluss der erfindungsgemässen Düse bildet die mittels Gewinde 17 lösbar mit der Schutzgasführungskappe 8 verbundene Schutzgaskappe 10. Deren konische Innenkontur umschliesst aufgrund des gleichen bereits erwähnten Winkels die Schutzgasführungskanäle 9 allseitig, so dass deren Austrittsöffnungen 11 ebenfalls in einer Ebene mit den Austrittsöffnungen 7 der Pulverführungskanäle 6 und der Laserstrahlaustrittsöffnung 18 liegen. Ueber den Schutzgasführungskanälen 9 entsteht wiederum ein minimaler Zwischenraum, der der Einführung des Schutzgasstromes über die dafür vorgsehenen Anschlüsse 14 und der Verteilung in die Schutzgasführungskanäle 9 dient.

Nach dem Anschliessen der erforderlichen Medien, wie Schutzgas, Pulver-Fördergasstrom und Kühlwasser ist die erfindungsgemässe Anordnung zum Laser-Pulver-Auftragsschweissen betriebsbereit.

Die Düse zum Oberflächenbehandeln metallischer Werkstücke, insbesondere zum Pulver-Auftragsschweissen bzw. Dünnschichtlegieren von hochbeanspruchten metallischen Bauteilen, kann wahlweise mit einer spiegel- oder linsenfokussierten Hochenergiestrahlanlage, wie einer Hochleistungslaseranlage verwendet werden. Die Düse ist so ausgebildet, dass sie an vorhandene Kühlmedienaggregate, Schutzgasleitungen und Pulverförderer/-absauger angeschlossen werden kann. Die Hochenergiestrahlanlage weist Mittel zum Positionieren des Pulver-Fördergasstromes gegenüber dem Hochenergiestrahl und solche zur Inertgasabschirmung auf.

Die Ankopplung der Düse an die Hochenergiestrahlanlage erfolgt über den im oberen Bereich konstanten Innendurchmesser ihres zentrischen Laserstrahlführungsteils 1. Das untere zusammenlaufende Teilstück ist mit einer Laserstrahlaustrittsöffnung 18 versehen und der obere angeflanschte Ringteil weist Kühlmedienzu- und -abführungen 3 auf, die in einen Wasserkühlungsraum 2 führen, der einerseits durch die zylindrische und keglige Aussenkontur des Laserstrahlführungsteils 1 und andererseits durch die kegelstumpfförmige Innenkontur einer Pulverführungskappe 4 gebildet wird.

Im schwächer werdenden Bereich endseitig sind an der Pulverführungskappe 4 angeformte Dichtlippen 13 vorhanden. Im nach oben aufgeweiteten Bereich ist der Wasserkühunsraum 2 durch den das Laserstrahlführungsteil 1 und die Pulverführungskappe 4 verbindenden Schraubverschluss am Ringteil abgedichtet. Auf der äusseren Umfangsfläche der im unteren Teilstück kegelstumpfförmigen Pulverführungskappe 4 ist eine Vielzahl gleichmässig verteilter Pulverführungskanäle 6 eingearbeitet. Weiter ist eine Schutzgasführungskappe 8 vorhanden, die eine an die Aussenkonturen der Pulverführungskappe 4 angepasste Innenkonturen aufweist und die so auf die Pulverführungskappe aufgesteckt und auf dieser befestigt ist, dass sich oberhalb der Pulverführungskanäle 6 ein Zwischenraum für das Einbringen und Verteilen des Pulver-Fördergasstromes ergibt und die Kegelflächen im Bereich der Pulverführungskanäle 6 fest gegeneinander gepresst sind und diese dabei allseitig dichten und bis zu deren Austrittsöffnungen 7 verschliessen.

Ausserdem sind auf der äusseren kegelstumpfförmigen Umfangsfläche der Schutzgasführungskappe 8 mehrere, ebenfalls gleichmässig verteilte, Schutzgasführungskanäle 9 mit oberen Zwischenräumen zum Einleiten des Schutzgasstromes eingebracht, die wiederum von einer, den äusseren Abschluss der Düse bildenden und mit der Schutzgasführungskappe 8 lösbar verbundenen Schutzgaskappe 10, mit angepasster Innenkontur bis zu ihren Austriffsöffnungen 11 abgedeckt sind.

## Patentansprüche

1. Düse zum Zuführen von pulverförmigem Schweissmaterial in den Arbeitsbereich des Laser-Strahls einer Pulver-Schweissanlage, wobei die Düse einen Laserkanal (18, 18') aufweist, durch den der Laserstrahl verläuft gekennzeichnet durch mehrere Pulverführungskanäle (6), die wenigstens im Bereich ihrer Austrittsöffnung (7) wenigstens angenähert auf einen Punkt gerichtet sind, durch den der Laserstrahl verläuft.

2. Düse nach Anspruch 1, mit mehreren Schutzgasführungskanälen (9) die wenigstens im Bereich ihrer Austrittsöffnung (11) wenigstens angenähert auf einen Punkt gerichtet sind.

3. Düse nach Anspruch 1 oder 2, bei welcher die Austrittsöffnungen (7, 11) der Pulverführungskanäle (6) und/oder der Schutzgaskanäle (9) kreisförmig um die Austrittsöffnung (18) des Laserkanals (18, 18') angeordnet sind.

4. Düse nach einem der Ansprüche 1 bis 3, bei der die Pulver- (6) und die Schutzgas-Führungskanäle (9) wenigstens im Bereich ihrer Austrittsöffnungen (7, 11) wenigstens angenähert den gleichen Winkel zur Mittelachse des Laserkanals (18, 18') aufweisen.

5. Düse nach einem der Ansprüche 1 bis 4, bei der die Zahl der Schutzgas- (6) und der Pulver-Führungskanäle (9) gleich oder angenähert gleich ist und ihre Zahl je zwischen 4 und 40, vorzugsweise zwischen 15 und 27 liegt.

6. Düse nach einem der Ansprüche 1 bis 5, mit Pulverführungskanälen (6), die wenigstens im Bereich der Austrittsöffnung (7) eine Querschnittsfläche im Bereich von 0.1 mm² und 10 mm², vorzugsweise von 0.6 mm² und 6 mm² aufweisen.

7. Düse nach einem der Ansprüche 1 bis 6 mit Schutzgaskanälen (9), die wenigstens im Bereich der Austrittsöffnung (11) eine Querschnittsfläche im Bereich von 0.5 mm² und 10 mm², vorzugsweise zwischen 1 mm² und 6 mm² aufweisen.

8. Düse nach einem der Ansprüche 1 bis 7, bei der die Pulver- (6) und/oder Schutzgas-Führungskanäle (9) mit je einem oder mehreren Anschlüssen (5, 14) verbunden sind.

9. Düse nach einem der Ansprüche 1 bis 8, bei der die Pulver- (6) und/oder Schutzgas-Führungskanäle (9) je in einen oder mehrere Verteilräume münden, zu welchen die Anschlüsse (5, 14) für den Pulverförderstrom bzw. für den Schutzgasstrom führen.

10. Düse nach einem der Ansprüche 1 bis 9, bei der der Winkel zwischen Laserstrahl und Pulverstrahl, bzw. Laserstrahl und Schutzgasstrahl im Bereich von 5° bis 50°, vorzugsweise im Bereich von 10° bis 45° und insbesondere zwischen 18° und 24° liegt.

11. Düse nach einem der Ansprüche 1 bis 10, mit mindestens einem Kühlmittelkanal (2).

12. Laser-Pulverbeschichtungs-Anlage mit einer Düse nach einem der Ansprüche 1 bis 11.

## Claims

1. Nozzle for supplying welding material in powder form into the working region of the laser beam of a powder welding plant, wherein the nozzle has a laser channel (18, 18') through which the laser beam passes, characterized by a plurality of powder supply channels (6) which are at least approximately directed in the region of their outlet opening (7) towards a point through which the laser beam passes.

2. Nozzle in accordance with claim 1, having a plurality of inert gas guide channels (9) which, at least in the region of their outlet opening (11), are at least approximately directed towards a point.

3. Nozzle in accordance with claim 1 or 2, in which the outlet openings (7, 11) of the powder guide channels (6) and/or of the inert gas channels (9) are arranged in a circle around the outlet opening (18) of the laser channel (18, 18').

4. Nozzle in accordance with one of the claims 1 to 3, wherein the powder guide channels (6) and the inert gas guide channels (9) have at least approximately the same angle to the central axis of the laser channel (18, 18') at least in the region of their outlet openings (7, 11).

5. Nozzle in accordance with one of the claims 1 to 4, wherein the number of inert gas guide channels (6) and powder guide channels (9) is the same or approximately the same and the number of each lies between 4 and 40 and preferably between 15 and 27.

6. Nozzle in accordance with one of the claims 1 to 5, with powder guide channels (6) which, at least in the region of the outlet opening (7), have a cross-sectional area in the range from 0.1 mm² and 10 mm², preferably from 0.6 mm² and 6 mm².

7. Nozzle in accordance with one of the claims 1 to 6, with inert gas channels (9) which, at least in the region of the outlet opening (11), have a cross-sectional area in the range from 0.5 mm² and 10 mm², preferably between 1 mm² and 6 mm².

8. Nozzle in accordance with one of the claims 1 to 7, wherein the powder guide channels (6) and/or the inert gas guide channels (9) are connected to one or more supply connections (5, 14) in each case.

9. Nozzle in accordance with one of the claims 1 to 8, wherein the powder guide channels (6) and/or the inert gas guide channels (9) each open into one or more distribution chambers to which the supply connections (4, 14) for the powder/conveying flow and for the inert gas flow respectively lead.

10. Nozzle in accordance with one of the claims 1 to 9, wherein the angle between the laser beam and the powder stream and/or between the laser beam and the inert gas stream lies in the range from 5° to 50°, preferably in the range from 10° to 45° and in particular between 18° and 24°.

11. Nozzle in accordance with one of the claims 1 to 10, having at least one coolant channel (2).

12. Laser powder coating plant with a nozzle in accordance with one of the claims 1 to 11.

## Revendications

1. Buse pour l'amenée d'un matériau à souder en poudre dans la zone de travail du rayon laser d'une installation de soudage en poudre, où la buse présente un canal (18, 18') du laser, par où passe le rayon laser, caractérisée par plusieurs canaux (6) de guidage de la poudre qui, au moins dans la zone de leur ouverture de sortie (7), sont dirigés au moins approximativement vers un point par lequel passe le rayon laser.

2. Buse selon la revendication 1 avec plusieurs canaux (9) de guidage du gaz protecteur qui, dans la zone de leur ouverture de sortie (11), sont dirigés au moins approximativement vers un point.

3. Buse selon la revendication 1 ou 2 dans laquelle les ouvertures de sortie (7, 11) des canaux (6) de guidage de la poudre et/ou des canaux (9) de gaz protecteur sont agencées en cercle autour de l'ouverture de sortie (18) du canal du laser (18, 18').

4. Buse selon l'une des revendications 1 à 3 où les canaux de guidage de la poudre (6) et du gaz protecteur (9) présentent, au moins dans la zone de leurs ouvertures de sortie (7, 11), au moins approximativement le même angle par rapport à l'axe du canal (18, 18') du laser.

5. Buse selon l'une quelconque des revendications 1 à 4 dans laquelle le nombre des canaux de guidage du gaz protecteur (6) et de la poudre (9) est égal ou presque égal et ce nombre se trouve entre 4 et 40, avantageusement entre 15 et 27.

6. Buse selon l'une des revendications 1 à 5 avec des canaux de guidage de la poudre (6), qui, au moins dans la zone de l'ouverture de sortie (7), présentent une section transversale de l'ordre de 0,1 mm² à 10 mm², avantageusement de 0,6 mm² à 6 mm².

7. Buse selon l'une des revendications 1 à 6 avec des canaux de gaz protecteur (9) qui présentent, au moins dans la zone de l'ouverture de sortie (11), une section transversale de l'ordre de 0,5 mm² à 10mm², avantageusement entre 1 mm² et 6 mm².

8. Buse selon l'une des revendications 1 à 7 dans laquelle les canaux de guidage de la poudre (6) et/ou du gaz protecteur (9) sont reliés par un ou plusieurs raccordements (5, 14).

9. Buse selon l'une des revendications 1 à 8 dans laquelle les canaux de guidage de la poudre (6) et/ou du gaz protecteur (9) débouchent dans un ou plusieurs espaces de répartition où mènent les raccordements (5, 14) pour le courant porteur la poudre ou, respectivement, le courant de gaz protecteur.

10. Buse selon l'une des revendications 1 à 9 dans laquelle l'angle entre le rayon laser et le rayon de la poudre ou respectivement le rayon laser et le rayon du gaz protecteur est de l'ordre de 5 à 50 , avantageusement de l'ordre de 10 à 45 et en particulier il est compris entre 18 et 24 .

11. Buse selon l'une des revendications 1 à 10 avec au moins un canal de fluide de refroidissement (2).

12. Installation d'enduction à la poudre au laser avec une buse selon l'une des revendications 1 à 11.
